(19) **Europäisches Patentamt**

**European Patent Office**

**Office européen des brevets**

(11) **EP 1 108 161 B1**

(12) **EUROPÄISCHE PATENTSCHRIFT**

(45) Veröffentlichungstag und Bekanntmachung des Hinweises auf die Patenterteilung:
**12.12.2001  Patentblatt 2001/50**

(51) Int Cl.⁷: **F16H 59/58**
// (B60T8/00, F16H61:16)

(21) Anmeldenummer: **99946058.7**

(22) Anmeldetag: **28.08.1999**

(86) Internationale Anmeldenummer:
**PCT/EP99/06353**

(87) Internationale Veröffentlichungsnummer:
**WO 00/14433 (16.03.2000 Gazette 2000/11)**

(54) **VERFAHREN ZUR KURVENFAHRTERKENNUNG FÜR EIN FAHRZEUG MIT SELBSTTÄTIG SCHALTENDEM GETRIEBE**

METHOD FOR DETECTING CORNERING FOR A VEHICLE WITH AN AUTOMATIC TRANSMISSION

PROCEDE DE DETECTION DE VIRAGES DESTINE A UN VEHICULE DOTE D'UNE BOITE DE VITESSES AUTOMATIQUE

(84) Benannte Vertragsstaaten:
**DE FR SE**

(30) Priorität: **02.09.1998  DE 19839858**

(43) Veröffentlichungstag der Anmeldung:
**20.06.2001   Patentblatt 2001/25**

(73) Patentinhaber: **ZF FRIEDRICHSHAFEN Aktiengesellschaft**
**88038 Friedrichshafen (DE)**

(72) Erfinder:
• **WOLF, Andreas**
**D-86213 Ravensburg (DE)**
• **WINKEL, Matthias**
**D-88250 Weingarten (DE)**
• **RÜCHARDT, Christoph**
**D-88239 Wangen (DE)**
• **WENGERT, Bertram**
**D-88677 Markdorf (DE)**
• **MÜLLER, Jürgen**
**D-88045 Friedrichshafen (DE)**

(56) Entgegenhaltungen:
**DE-A- 4 230 481        DE-A- 19 523 804**
**DE-A- 19 618 805**

**Beschreibung**

Die Erfindung betrifft ein Verfahren zur Kurvenfahrterkennung, insbesondere für ein Fahrzeug mit selbsttätig schaltendem Getriebe, bei dem an Rädern des Fahrzeugs Raddrehzahlsignale aufgenommen werden und eine Steuerungseinrichtung zyklisch einen aktuellen Kurvenradius ermittelt.

Solche Verfahren werden in bekannten Getriebesteuerungen eingesetzt, um beispielsweise abhängig von der aktuellen Querbeschleunigung des Fahrzeugs einen Zustand "Kurvenfahrt" zu erkennen und Gangschaltungen zu unterdrücken. Aus der DE 196 18 805 A1 ist ein Verfahren zur Bewertung einer Kurvenfahrt bei einem Automatgetriebe bekannt, bei welchem von einer Meßeinrichtung an Rädern des Fahrzeugs gemessene Raddrehzahlen zur Berechnung einer Querbeschleunigung des Fahrzeugs verwendet werden.

Bei längeren Fahrzeugen, wie z. B. Sattelschleppern, sind die bekannten Verfahren nicht geeignet, die Zeitpunkte von Kurvenbeginn und Kurvenende exakt zu bestimmen. Beispielsweise kann eine Zugmaschine bereits wieder geradeausfahren, während der Sattelauflieger sich noch in einer Kurve befindet.

Aufgabe der Erfindung ist es daher, ein Verfahren zu schaffen, mit dem ein Fahrzustand "Kurvenfahrt" auch für lange Fahrzeuge mit einfachen Mitteln zuverlässig und schnell erkannt wird.

Diese Aufgabe wird durch ein, auch die Merkmale des kennzeichnenden Teils des Hauptanspruchs aufweisendes Verfahren gelöst. Die Unteransprüche enthalten vorteilhafte Ausgestaltungen sowie vorteilhafte Verwendungen des Verfahrens.

Erfindungsgemäß wird auf den Beginn eines Kurvenfahrtzustands dann geschlossen, wenn der aus den Raddrehzahlsignalen der Vorderräder berechnete Kurvenradius einen ersten Grenzradius unterschreitet. Die Raddrehzahlen der Vorderräder werden verwendet, um den Kurvenfahrtzustand frühestmöglich zu erkennen. Nach Überschreiten eines zweiten Grenzradius wird auf das Ende des Kurvenfahrtzustands erst dann geschlossen, wenn eine bestimmte, mit der Fahrzeuglänge zusammenhängende Wegstrecke zurückgelegt ist, während der der erste Grenzradius nicht mehr unterschritten wird. Am Beispiel eines Sattelschleppers wird das Ende des Kurvenfahrtzustands also nicht schon dann erkannt, wenn die Zugmaschine wieder geradeausfährt, sondern erst dann, nachdem eine bestimmte Wegstrecke zurückgelegt wurde, während der der Sattelauflieger noch um die Kurve fährt.

Der zweite Grenzradius ist vorteilhafterweise um einen vorgebbaren Betrag größer als der erste Grenzradius. Durch diese Radiushysterese wird ein Hin- und Herspringen zwischen den Zuständen "Kurvenfahrt" und "Geradeausfahrt" vermieden.

In einer vorteilhaften Ausgestaltung des erfindungsgemäßen Verfahrens sind die Grenzradien abhängig von der Fahrzeuggeschwindigkeit in der Getriebesteuerung abgelegt, wobei die Grenzwerte bei kleinen Fahrzeuggeschwindigkeiten kleiner sind als bei großen Fahrzeuggeschwindigkeiten. Hierdurch wird vermieden, daß numerische Ungenauigkeiten, deren Auswirkungen bei kleinen Fahrzeuggeschwindigkeiten groß sind, dazu führen, daß fälschlicherweise auf einen Kurvenfahrtzustand geschlossen wird.

Die Auswirkungen von einzelnen ungenauen Messungen können begrenzt werden, indem die Änderung des berechneten Kurvenradius zwischen zwei aufeinanderfolgenden Abtastschritten durch eine maximal zulässige Änderung nach oben begrenzt ist.

Das Signal des berechneten Kurvenradius läßt sich vorteilhaft durch ein PT1-Filterglied glätten.

Radschlupf an einzelnen Rädern könnte zu Fehlinterpretationen des Kurvenradius führen, weswegen es vorteilhaft ist, nicht auf einen Kurvenfahrtzustand zu schließen, wenn ein Radschlupfvermeidungssystem, wie ABS oder ASR, aktiv ist. Ebenso ist es vorteilhaft, eine Mindestgeschwindigkeit vorzugeben, unterhalb welcher nicht auf Kurvenfahrt geschlossen wird, um Fehlinterpretationen aufgrund von numerischen Ungenauigkeiten zu vermeiden.

Das erfindungsgemäße Verfahren und dessen Weiterbildungen kann vorteilhaft zur Steuerung eines selbsttätig schaltenden Getriebes verwendet werden, wobei die Schaltungsauslösung von Hoch- oder Rückschaltungen während Kurvenfahrt beeinflußt wird. Unerwünschte Hoch- oder Rückschaltungen können so während Kurvenfahrt vermieden werden.

Das Verfahren kann auch vorteilhaft innerhalb eines Fahrwiderstandsberechnungs-Algorithmus des Fahrzeugs verwendet werden, um den während einer Kurvenfahrt erhöhten Fahrwiderstand zu berücksichtigen. Beispielsweise kann die Fahrwiderstandsberechnung nach dem Kurvenende neu initialisiert werden.

Anhand der beiliegenden Zeichnungen wird das erfindungsgemäße Verfahren näher erläutert, wobei

Fig. 1      eine schematische Darstellung eines Fahrzeugs in Kurvenfahrt;

Fig. 2      ein Blockschaltbild eines Algorithmus zur Kurvenradiusberechnung;

Fig. 3      einen Zustandsautomaten des erfindungsgemäßen Verfahrens und

Fig. 4      ein Diagramm mit der Abhängigkeit eines Kurvengrenzradius von der Geschwindigkeit

zeigen.

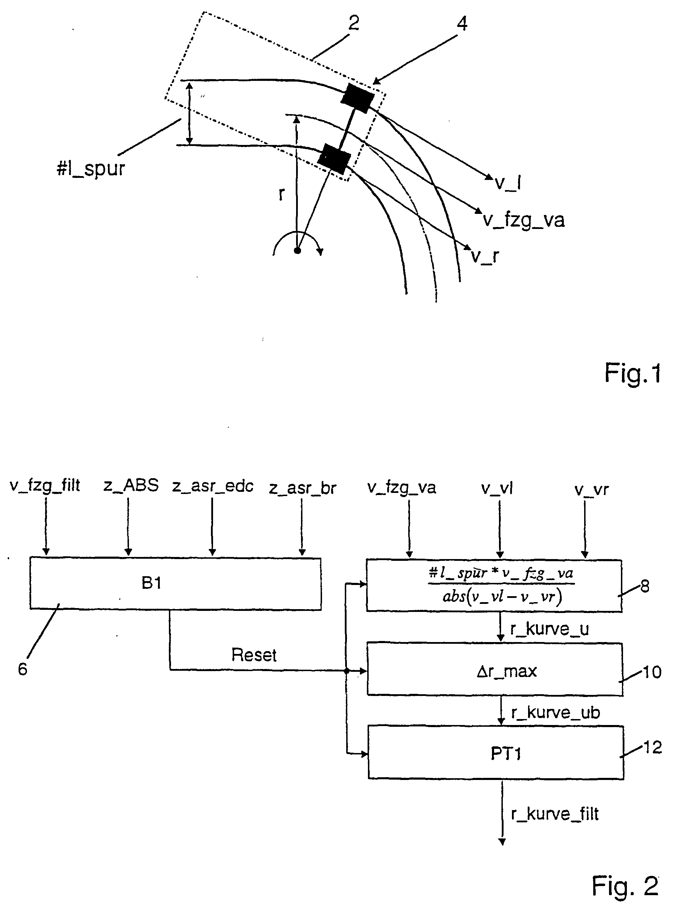

In Fig. 1 befindet sich das schematisch skizzierte Fahrzeug 2 mit seiner Vorderachse 4 am Beginn einer Kurve mit dem Kurvenradius r. Das Fahrzeug weist die Spurweite #1_spur auf. Mit $v_1$ bzw. $v_r$ sind die Geschwindigkeiten des linken bzw. rechten Vorderrades bezeichnet. Die Fahrzeuggeschwindigkeit ist mit v_fzg_va bezeichnet. Aus diesen Größen läßt sich ein Kurvenradius nach folgender Gleichung ermitteln:

$$r\_kurve\_u = \frac{\#l\_spur * v\_fzg\_va}{abs(v\_l - v\_r)}$$

Darin sind:

| | |
|---|---|
| r_kurve_u | Kurvenradius |
| v_fzg_va | Fahrzeuggeschwindigkeit |
| v_vl | Geschwindigkeit, linkes Vorderrad |
| v_vr | Geschwindigkeit, rechtes Vorderrad |

Anhand des Blockschaltbildes gemäß Fig. 2 wird die Radienberechnung näher erläutert. Im Block B1 wird der Algorithmus abhängig von einer Fahrzeuggeschwindigkeit v_fzg_filt und ABS- bzw. ASR-Zustandsgrößen z_ABS, z_asr_edc, z_asr_br gesteuert. Die Berechnung des Radius erfolgt nur, wenn die ABS- bzw. ASR-Zustandsgrößen anzeigen, daß diese Systeme nicht aktiv sind. Auf diese Weise werden durch Radschlupf verursachte Fehler vermieden. Die Berechnung des Radius erfolgt außerdem nur, wenn die Fahrzeuggeschwindigkeit v_fzg_filt größer ist als eine vorgebbare Mindestfahrzeuggeschwindigkeit, da numerische Abweichungen systembedingt bei kleinen Geschwindigkeiten sich besonders stark auswirken. In dem mit 8 bezeichneten Block wird zyklisch nach der oben genannten Formel ein Kurvenradius r_kurve_u berechnet. Im Block 10 wird die Differenz zwischen dem Wert für r_kurve_u dieses Berechnungszyklus mit dem Wert r_kurve_ub des letzten Berechnungszyklus gebildet. Wenn diese Differenz größer als eine maximal zulässige Änderung ist, berechnet sich der neue Wert für r_kurve_ub aus der Summe von letztem Wert für r_kurve_ub und dem Wert für die maximal zulässige Änderung. Ansonsten wird r_kurve_ub = r_kurve_u gesetzt. Durch diese Maßnahme werden die Auswirkungen von einzelnen unplausiblen Fehlmessungen begrenzt.

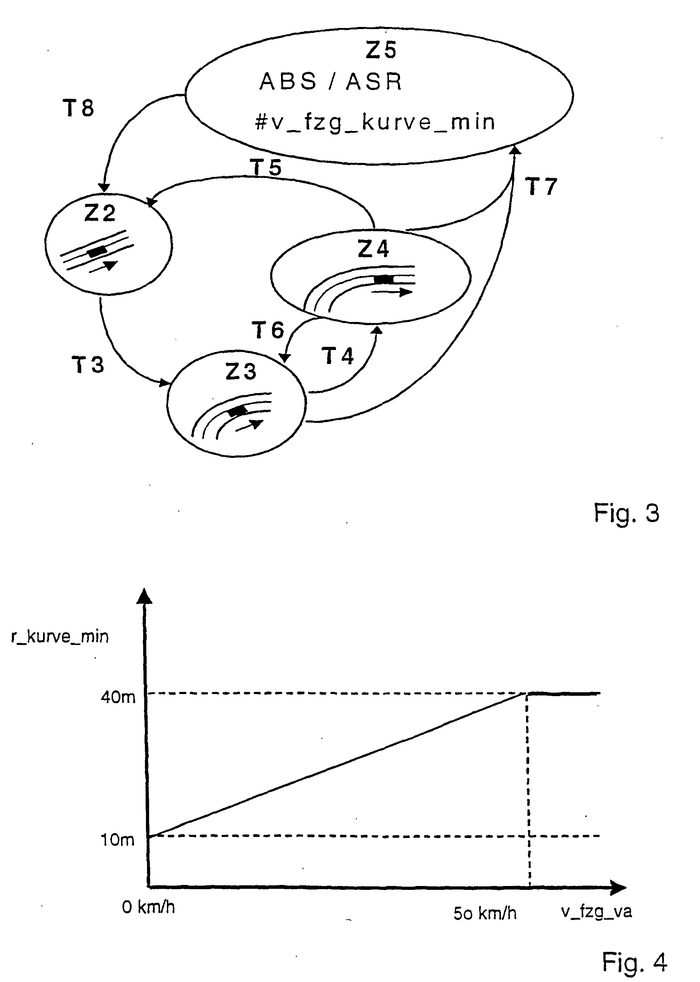

Schließlich wird die Qualität des berechneten aktuellen Kurvenradius r_kurve_filt dadurch verbessert, daß im Block 12 ein PT1-Verzögerungsglied vorgeschaltet ist. Das auf diese Weise erzeugte Signal r_kurve_filt für den aktuellen Kurvenradius eignet sich gut für die weitere Verarbeitung in dem erfindungsgemäßen Verfahren, welches anhand Fig. 3 näher erläutert wird.

Im Zustand Z2, beispielsweise während Geradeausfahrt, wird zyklisch der aktuelle Kurvenradius r_kurve_filt, wie oben beschrieben, ermittelt. Der aktuelle Kurvenradius r_kurve_filt wird mit einem ersten Grenzkurvenradius #r_kurve_min verglichen. Bei Unterschreitung dieses Grenzkurvenradius wird auf den Beginn eines Kurvenfahrtzustandes geschlossen. Dabei wird die Transition T3 geschaltet, so daß nunmehr der Zustand Z3 aktiv ist, während dem auf Kurvenfahrt geschlossen wird. Im Zustand Z3 wird der aktuelle Kurvenradius r_kurve_filt mit einem zweiten Grenzkurvenradius verglichen, der der Summe aus erstem Grenzkurvenradius und einem vorgebbaren Hysteresewert entspricht. Die Transition T4 schaltet, wenn dieser zweite Grenzkurvenradius überschritten wird, so daß nunmehr der Zustand Z4 aktiv ist. In diesem Zustand befinden sich die Vorderräder des Fahrzeugs beispielsweise schon wieder in Geradeausfahrtstellung, während der hintere Teil des Fahrzeugs (Sattelauflieger) sich noch in der Kurve befindet. Beim Eintritt in den Zustand Z4 startet die Messung einer vom Fahrzeug zurückgelegten Wegstrecke. Wenn der Wert der zurückgelegten Wegstrecke einen bestimmten vorgebbaren Grenzwert erreicht, schaltet die Transition T5, mit der vom Zustand Z4 in den Zustand Z2 (Geradeausfahrt) übergegangen wird.

Wenn, während Zustand Z4 aktiv ist, der aktuelle Kurvenradius r_kurve_filt den ersten Grenzkurvenradius unterschreitet, schaltet Transition T6, wodurch wieder in den Zustand Z3 übergegangen wird.

Ausgehend vom Zustand Z3 (Kurvenfahrt) oder vom Zustand Z4 wird der Zustand Z5 über die Transition T7 dann erreicht, wenn ein Radschlupferkennungssystem (ABS, ASR) aktiv ist oder wenn vom Fahrzeug eine vorgebbare Mindestgeschwindigkeit #v_fzg_kurve_min unterschritten wird. Im Zustand Z5 wird die Radienberechnung zurückgesetzt. Erst wenn keine der Bedingungen für Z5 mehr vorliegt, wird über die Transition T8 wieder in den Zustand Z2 (Geradeausfahrt) geschaltet.

Schließlich zeigt Fig. 4 eine Kennlinie für den ersten Kurvengrenzradius #r_kurve_min, die abhängig von der Fahrzeuggeschwindigkeit v_fzg_va in der Steuerung abgelegt ist. Die Werte für #r_kurve_min sind bei kleinen Fahrzeuggeschwindigkeiten kleiner als bei großen Fahrzeuggeschwindigkeiten. Hierdurch wird vermieden, daß numerische Fehler, die bei kleinen Fahrzeuggeschwindigkeiten sich besonders stark auswirken, dazu führen, daß fälschlicherweise auf den Zustand "Kurvenfahrt" geschlossen wird.

Bezugszeichen

| | |
|---|---|
| 2 | Fahrzeug |
| 4 | Vorderachse |
| 6 | Block B1 (Steuerung des Algorithmus) |
| 8 | Block (Berechnung von r_kurve u) |
| 10 | Block (Berechnung von r_kurve_ub) |
| 12 | Block (Berechnung des aktuellen Kurvenradius r_kurve_filt) |
| Z2 | Zustand Geradeausfahrt |
| Z3 | Zustand Kurvenfahrt |
| Z4 | Übergangszustand |
| Z5 | Zustand ABS/ASR aktiv oder |

zu geringe Fahrzeuggeschwindigkeit

T3 Transition
T4 Transition
T5 Transition
T6 Transition
T7 Transition
T8 Transition

**Patentansprüche**

1. Verfahren zur Kurvenfahrterkennung, insbesondere für ein Fahrzeug (2) mit selbsttätig schaltendem Getriebe, bei dem an Rädern (4) eines Fahrzeugs Raddrehzahlsignale aufgenommen werden und eine Steuerungseinrichtung aus den Raddrehzahlsignalen zyklisch einen aktuellen Kurvenradius ermittelt, **dadurch gekennzeichnet,**

   **daß** der aktuelle Kurvenradius aus den Raddrehzahlsignalen der Vorderräder ermittelt wird,
   **daß** der aktuelle Kurvenradius mit einem ersten Grenzkurvenradius verglichen wird und bei Unterschreitung des ersten Grenzkurvenradius auf den Beginn eines Kurvenfahrtzustands geschlossen wird,
   **daß** der aktuelle Kurvenradius dann mit einem zweiten Grenzkurvenradius verglichen wird und bei Überschreitung des zweiten Grenzkurvenradius eine vom Fahrzeug zurückgelegte Wegstrecke in der Steuerungseinrichtung ermittelt wird,
   **daß** diese vom Fahrzeug zurückgelegte Wegstrecke mit einer vorgebbaren Wegstrecke verglichen wird
   und **daß** auf das Ende des Kurvenfahrtzustands geschlossen wird,
   wenn die vom Fahrzeug zurückgelegte Wegstrecke die vorgebbare Wegstrecke überschreitet
   und wenn der aktuelle Grenzkurvenradius den ersten Grenzkurvenradius nicht wieder unterschreitet, während die vorgebbare Wegstrecke zurückgelegt wird.

2. Verfahren nach Anspruch 1, **dadurch gekennzeichnet, daß** der zweite Grenzkurvenradius um einen vorgebbaren Hysteresebetrag größer ist als der erste Grenzkurvenradius.

3. Verfahren nach Anspruch 1 oder 2, **dadurch gekennzeichnet, daß** der erste bzw. der zweite Grenzkurvenradius in der Steuerungseinrichtung abhängig von der Fahrzeuggeschwindigkeit abgelegt ist, wobei die Grenzwerte bei kleinen Fahrzeuggeschwindigkeiten kleiner sind als bei großen Fahrzeuggeschwindigkeiten.

4. Verfahren nach einem der Ansprüche 1 bis 3, **dadurch gekennzeichnet, daß** die Änderung des berechneten Kurvenradius zwischen zwei aufeinanderfolgenden Abtastschritten durch eine maximal zulässige Änderung nach oben begrenzt ist, um die Auswirkung von einzelnen ungenauen Messungen zu begrenzen.

5. Verfahren nach Anspruch 4, **dadurch gekennzeichnet, daß** der berechnete Kurvenradius durch ein PT1-Filterglied geglättet ist.

6. Verfahren nach einem der Ansprüche 1 bis 5, **dadurch gekennzeichnet, daß** auf einen Kurvenfahrtzustand nicht geschlossen wird, wenn ein Radschlupfvermeidungssystem (ABS, ASR) aktiv ist.

7. Verfahren nach einem der Ansprüche 1 bis 6, **dadurch gekennzeichnet, daß** auf einen Kurvenfahrtzustand nicht geschlossen wird, wenn die Fahrzeuggeschwindigkeit kleiner als eine Mindestgeschwindigkeit ist.

8. Verwendung eines Verfahrens nach einem der Ansprüche 1 bis 7 zur Steuerung eines selbsttätig schaltenden Getriebes, wobei die Schaltungsauslösung von Hoch- oder Rückschaltungen während Kurvenfahrt beeinflußt wird.

9. Verwendung eines Verfahrens nach einem der Ansprüche 1 bis 7 in einem Fahrwiderstandsberechnungs-Algorithmus, um den während einer Kurvenfahrt erhöhten Fahrwiderstand zu berücksichtigen.

**Claims**

1. Method for detecting cornering, especially of a vehicle (2) with automatic transmission, whereby wheel speed signals are picked up on the wheels (4) of the vehicle and a control device uses the wheel speed signals for cyclic determination of a current radius of bend,
   **characterized**

   **in that** the current radius of bend is determined on the basis of the wheel speed signals of the front wheels;
   the current radius of bend is compared with a first limit bend radius and the beginning of a cornering status is determined when the current bend radius falls below a first limit bend radius;
   the current bend radius is then compared with a second limit bend radius and a distance covered by the vehicle is determined in the control unit when the second limit bend radius is exceeded;

the distance covered by the vehicle is compared with a pre-settable distance;

the end of a cornering status is determined when the distance covered by the vehicle exceeds the pre-settable distance

and if the current limit bend radius does not once more fall below the first limit bend radius while the pre-settable distance is covered.

2. Method according to claim 1, **characterized**

**in that** the second limit bend radius exceeds the first limit bend radius by a pre-settable hysteresis value.

3. Method according to claim 1 or 2, **characterized**

**in that** the first or second limit bend radius in the control unit depends on vehicle speed, with the limit values for low vehicle speeds being lower than those for high vehicle speeds.

4. Method according to one of the claims 1 to 3, **characterized**

**in that** modification of the bend radius calculated between two consecutive pickup points is constrained by a maximum upper limit in order to limit the effects of individual imprecise measurements.

5. Method according to claim 4, **characterized**

**in that** the bend radius calculated is smoothened by a PT1 filter element.

6. Method according to one of the claims 1 to 5, **characterized**

**in that** no cornering status is determined if ABS/ASR systems are active.

7. Method according to one of the claims 1 to 6, **characterized**

**in that** no cornering status is determined if vehicle speed falls below a minimum speed.

8. Use of a method according to one of the claims 1 to 7 for control of an automatic transmission, whereby gearshift actuation is influenced by upshifts or downshifts during cornering.

9. Use of a method according to one of the claims 1 to 7 in a drag algorithm to consider the increased drag during cornering.

## Revendications

1. Procédé pour la détection d'une marche en virage, en particulier pour un véhicule (2) à boîte de vitesses à changement automatique, dans lequel, sur des roues (4) d'un véhicule, on détecte des signaux de vitesse de rotation des roues et un dispositif de commande calcule de façon cyclique un rayon de virage actuel sur la base des signaux de vitesse de rotation des roues, **caractérisé**

**en ce que** le rayon réel du virage est calculé à partir des signaux de vitesse de rotation des roues avant,

**en ce que** le rayon actuel du virage est comparé à un premier rayon de virage limite et, s'il est inférieur au premier rayon de virage limite, on conclut à un début d'un état de marche en virage,

**en ce que** le rayon de virage actuel est ensuite comparé à un deuxième rayon de virage limite et, s'il est supérieur au deuxième rayon de virage limite, une distance parcourue par le véhicule est calculée dans le dispositif de commande,

**en ce que** cette distance parcourue par le véhicule est comparée à une distance pouvant être prédéterminée,

et **en ce que** qu'on conclut à la fin de l'état de marche en virage

lorsque la distance parcourue par le véhicule est supérieure à la distance pouvant être prédéterminée

et lorsque le rayon de virage limite actuel n'est pas de nouveau devenu inférieur au premier rayon de virage limite pendant que la distance pouvant être prédéterminée est parcourue.

2. Procédé selon la revendication 1, **caractérisé en ce que** le deuxième rayon de virage limite est supérieur au premier rayon de virage limite d'une valeur d'hystérésis pouvant être prédéterminée.

3. Procédé selon la revendication 1 ou 2, **caractérisé en ce que** le premier ou le deuxième rayon de virage limite est enregistré dans le dispositif de commande en fonction de la vitesse du véhicule, les valeurs limites étant plus petites aux petites vitesses du véhicule qu'aux grandes vitesses du véhicule.

4. Procédé selon l'une des revendications 1 à 3, **caractérisé en ce que** la variation du rayon de virage calculé entre deux phases d'analyse successives est limitée vers le haut par une variation maximale admissible pour limiter l'effet de différentes mesures imprécises.

5.  Procédé selon la revendication 4, **caractérisé en ce que** le rayon de virage calculé est lissé par un élément filtrant PT1.

6.  Procédé selon l'une des revendications 1 à 5, **caractérisé en ce qu'**on ne conclut pas à un état de marche en virage lorsqu'un système de prévention du glissement des roues (ABS, ASR) est en action.

7.  Procédé selon l'une des revendications 1 à 6, **caractérisé en ce qu'**on ne conclut pas à un état de marche en virage lorsque la vitesse du véhicule est inférieure à une vitesse minimale.

8.  Utilisation d'un procédé selon l'une des revendications 1 à 7 pour la commande d'une boîte de vitesses à changement automatique, dans laquelle la résolution du changement est influencée par des changements de rapport en montée ou en rétrogradation pendant la marche en virage.

9.  Utilisation d'un procédé selon l'une des revendications 1 à 7 dans un algorithme de calcul de la résistance à la marche pour prendre en compte la résistance à la marche qui est augmentée pendant une marche en virage.

#l_spur

r

v_l

v_fzg_va

v_r

Fig.1

v_fzg_filt    z_ABS    z_asr_edc    z_asr_br        v_fzg_va        v_vl        v_vr

B1

$$\frac{\#l\_sp\bar{u}r * v\_f z g\_va}{abs(v\_vl - v\_vr)}$$

8

6

Reset

r_kurve_u

$\Delta r\_max$

10

r_kurve_ub

PT1

12

r_kurve_filt

Fig. 2

7

Fig. 3

Fig. 4